# EUROPÄISCHE PATENTSCHRIFT

(11) **EP 1 426 309 B1**
(45) Veröffentlichungstag und Bekanntmachung des Hinweises auf die Patenterteilung: **08.02.2006**
(21) Anmeldenummer: 03027531.7
(22) Anmeldetag: 29.11.2003
(51) Int. Cl.: B65G 1/04, B66F 9/07

(54) **Regalbediengerät**
Stacker crane
Transstockeur

(30) Priorität: 05.12.2002 DE 10257107
(43) Veröffentlichungstag der Anmeldung: 09.06.2004
(73) Patentinhaber: EISENMANN Maschinenbau GmbH & Co. KG, 71032 Böblingen (DE)
(72) Erfinder: Ehrenleitner, Franz, 70439 Stuttgart (DE); Dehm, Thomas, 72762 Reutlingen (DE)
(74) Vertreter: Ostertag, Ulrich

(56) Entgegenhaltungen:
- GB-A- 777 989
- US-A- 3 428 195

## Beschreibung

Die Erfindung betrifft ein Regalbediengerät mit
a) einem Tragwagen, der mittels eines Antriebs an mindestens einer im wesentlichen horizontalen Tragschiene entlang eines Regalganges verfahrbar ist;
b) einer von dem Tragwagen mitgeführten Hubplattform zur Aufnahme von Lagergut;
c) einer Hubvorrichtung, mit welcher die Hubplattform gegenüber dem Tragwagen in vertikaler Richtung bewegbar ist;
d) einer Stabilisierungseinrichtung, welche ein seitliches Auslenken der Hubplattform gegenüber dem Tragwagen verhindert;
   eine Hubvorrichtung welche mindestens zwei Zugmittel umfasst, an denen die Hubplattform von dem Tragwagen abge hängt ist.
   Regalbediengeräte dieser Art dienen dazu, Lagergut in den Fächern von Hochregalen einzulagern und aus diesen wieder zu entnehmen. Die Höchregale erstrecken sich dabei entlang eines Regalganges, in dem das Regalbediengerät verfahrbar ist. Zur Erzielung eines hohen Umschlages des Lagergutes und damit zur Minimierung der für eine bestimmte Kapazität erforderliche Größe des Hochregallagers insgesamt sollte die Geschwindigkeit, mit welcher die Hubplattform von einer Position zur anderen verfahrbar ist, möglichst groß sein. Da die beschleunigte Masse und die Verbindungseinrichtung, über welche die Hubplattform mit dem Tragwagen verbunden ist, ein schwingungsfähiges System bilden, bedeutet eine hohe Beschleunigung regelmäßig auch dieGefahr von großen Schwingungen der Hubplattform.
   Bekannte Regalbediengeräte der eingangs genannten Art weisen daher neben dem Tragwagen, der im allgemeinen auf dem Raumboden verfahrbar ist, zur Stabilisierung der Hubplattform eine massive Säule auf, an der die Hubplattform bei ihrer Vertikalbewegung geführt ist. Um die erforderliche Steifigkeit der Führungssäule zu erzielen, werden große Massen benötigt. Regalbediengeräte dieser Art können ein Gesamtgewicht von 25 Tonnen erreichen. Es ist klar, dass enorme Antriebsleistungen erforderlich sind, um diese Regalbediengeräte mit hohen Beschleunigungen betreiben zu können. Trotz der massiven Führungssäulen ergeben sich erhebliche Schwingungsprobleme, zumal die Eigenfrequenzen des schwingungsfähigen Systemes auf Grund der hohen Massen verhältnismäßig niedrig liegen. Die GB-A-777989 offenbart ein solches Regal bediengerät.
   Aufgabe der vorliegenden Erfindung ist es, ein Regalbediengerät der eingangs genannten Art derart auszugestalten, dass die Hubplattform sehr schnell beschleunigbar ist und Schwingungsprobleme minimiert sind.
   Diese Aufgabe wird erfindungsgemäß dadurch gelöst, dass
f) die Stabilisierungseinrichtung umfasst:
   fa) mindestens drei Zugmittel, die an in Fahrtrichtung gegenüberliegenden Seiten der Hubplattform befestigt sind, wobei mindestens zwei Zugmittel zu mindestens zwei Befestigungsstellen verlaufen, die im Bereich des einen Gangendes angeordnet sind, und mindestens ein Zugmittel einer Befestigungstelle verläuft, die im Bereich des anderen Gangendes angeordnet ist;
   fb) für jedes Zugmittel ein Antrieb, durch dessen Betätigung die effektive Länge des Zugmittels zwischen der Hubplattform und der Befestigungsstelle veränderbar ist;
   fc) eine Steuerung, welche die Antriebe so ansteuert, dass die Zugmittel in der jeweils gewünschten Position der Hubplattform straff sind.

Unter dem Begriff "Zugmittel" werden vorrangig Seile, Ketten, Gurte oder dergleichen verstanden. Nachfolgend wird stellvertretend für derartige Zugmittel zur terminologischen Vereinfachung von "Seilen" gesprochen.

Erfindungsgemäß wird konsequent darauf geachtet, dass alle beschleunigten Massen des Regalbediengeräts, insbesondere die Masse der Hubvorrichtung und die Masse der Stabilisierungseinrichtung, so klein wie möglich sind. Kleine Massen bedeuten geringe Kräfte und geringe Antriebsleistungen, die zur Beschleunigung der Hubplattform erforderlich sind. Durch schnelle Bewegungen der Hubplattform lässt sich die Kapazität des Hochregallagers vergrößern bzw. dessen Dimensionen können bei konstanter Kapazität verringert werden. Da die beschleunigten Massen gleichzeitig Massen des oben schon erwähnten schwingungsfähigen Systemes sind, werden die Resonanzfrequenzen zu höheren Werten verschoben, wo sie leichter beherrschbar sind. Die erfindungsgemäß eingesetzte, aus mindestens drei Seilen bestehende Hubvorrichtung hat die denkbar geringste Masse. Gleiches gilt für die Stabilisierungseinrichtung, die nur aus den mindestens drei Zugmitteln besteht. Die Zugmittel können darüber hinaus sehr straff gehalten werden, so dass die Federkonstante der Feder des schwingungsfähigen Systemes sehr groß und auch deshalb die Frequenz der Eigenschwingungen dieses Systemes sehr hoch ist.

Das erfindungsgemäße Regalbediengerät ist in seinen Bewegungen mathematisch stets exakt bestimmt, weist insbesondere keine zweideutigen Lösungen der kinematischen Gleichungen auf, so dass eine Rechner gestützte Steuerung problemlos möglich ist.

Vorteilhaft ist, wenn die Antriebe paarweise an gegenüberliegenden Enden des Regalganges angeordnet sind und so die dortigen Befestigungspunkte bilden. In diesem Falle gehören die Antriebe nicht zu den beschleunigten Massen.

Diesbezüglich ungünstiger aber immerhin noch mit Vorteilen gegenüber dem Stande der Technik behaftet ist diejenige Ausgestaltung, bei der die Antriebe an der Hubplattform angeordnet sind.

Werden flexible Zugmittel eingesetzt, so eignen sich als Antriebe insbesondere Trommeln, auf denen die Zugmittel aufwickelbar sind.

Zweckmäßig ist in diesem Falle, wenn die jeweils auf einer Seite der Hubplattform angeordneten Trommeln durch eine gemeinsame Antriebswelle angetrieben sind. Bei dieser Ausgestaltung wird davon Gebrauch gemacht, dass die beiden Zugmittel, die sich jeweils auf derselben Seite der Hubplattform befinden, bei der Bewegung der Hubplattform in derselben Weise verlängert bzw. verkürzt werden müssen. Ihre Trommeln müssen daher stets in derselben Weise verdreht werden. Dies ist am einfachsten durch die gemeinsame Anordnung auf derselben Antriebswelle zu erzielen. Hierdurch wird auch der Steuerungsaufwand vereinfacht.

Ein Ausführungsbeispiel der Erfindung wird nachfolgend an Hand der Zeichnung näher erläutert; es zeigen
- Figur 1: perspektivisch ein erfindungsgemäßes Regalbediengerät vor einem Hochregal;

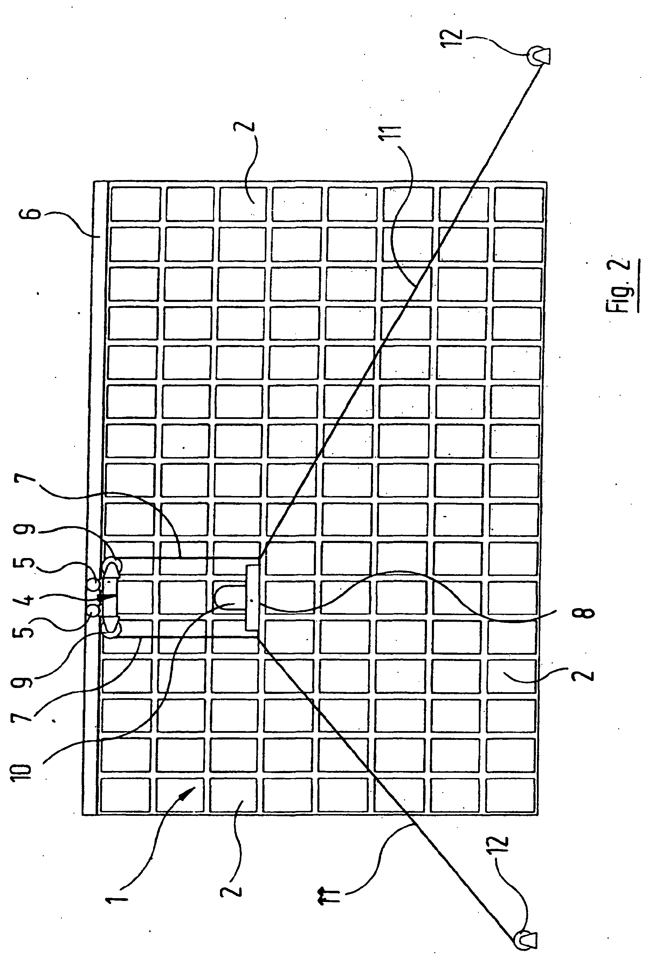

- Figur 2: die Seitenansicht zu Figur 1.

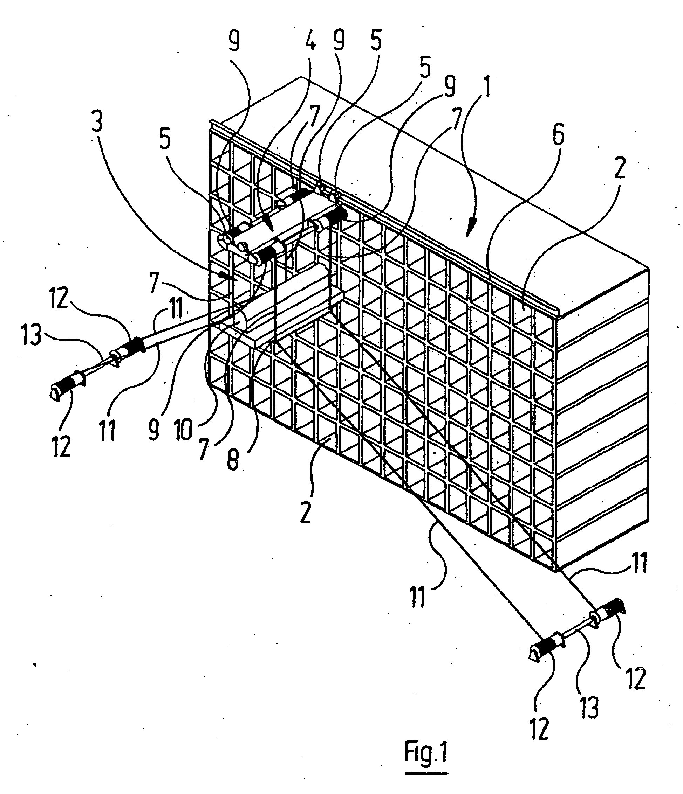

In der Zeichnung ist mit dem Bezugszeichen 1 ein konventionelles Hochregal gekennzeichnet, das aus einem Stahlbau besteht und eine Vielzahl von Regalfächern 2 aufweist, in denen Lagergut 10 gelagert werden kann. Das Einlagern von Lagergut 10 in die Lagerfächer 2 und bzw. das Entnehmen von Lagergut 10 aus diesen Lagerfächern 2 wird durch ein Regalbediengerät 3 besorgt, das in einem Regalgang zwischen dem in Figur 1 dargestellten Hochregal 1 und einem parallel vor diesem zu denkenden entsprechenden Hochregal verfahrbar ist.

Das Regalbediengerät 3 umfasst einen Tragwagen 4, der auf gegenüberliegenden Seiten mit jeweils einem Paar angetriebener Tragrollen 5 versehen ist. Jedes Paar von Tragrollen 5 verläuft in einer Tragschiene 6, die am oberen Rande des entsprechenden Hochregales 1 befestigt ist und im wesentlichen horizontal verläuft.

Über vier Seile 7 ist von dem Tragwagen 4 eine Hubplattform 8 abgehängt. Angetriebene Seiltrommeln 9 an dem Tragwagen 4 nehmen den oberen Endbereich der Seile 7 auf, so dass durch Auf- bzw. Abwickeln der Seile 7 auf den Seiltrommeln 9 die Höhenposition der Hubplattform 8 gegenüber dem Tragwagen 4 verändert werden kann.

Die Hubplattform 8 trägt das Lagergut 10 und kann entsprechend den Befehlen einer Steuerung durch eine horizontale Translationsbewegung des Wagens 4 und eine Vertikalbewegung gegenüber dem Tragwagen 4 vor jedes Lagerfach 2 gefahren werden, um dort Lagergut 10 entweder abzusetzen oder aufzunehmen.

Der Transport des Lagergutes 10 zu den Zielpositionen sollte so schnell wie möglich erfolgen. Dies bedeutet, dass der Tragwagen 4 mit der von ihr mitgeführten Hubplattform 8 möglichst schnell auf hohe Geschwindigkeiten beschleunigt und wieder abgebremst werden muß. Um zu verhindern, dass bei diesen Bewegungsvorgängen die Hubplattform 8 seitlich ausgelenkt wird, insbesondere ins Schwingen kommt, ist eine Stabilisierungseinrichtung vorgesehen, welche vier Spannseile 11 umfasst. Jeweils zwei dieser Spannseile 11 sind an gegenüberliegenden Seiten der Hubplattform 8 befestigt. Jedes Spannseil 11 verläuft von der Hubplattform 8 zu einer Seiltrommel 12. Die Seiltrommeln 12 befinden sich paarweise am Boden der gegenüberliegenden Enden des Regalganges. Jeweils die beiden derselben Seite der Hubplattform 8 zugeordneten Seiltrommeln 12 sind, wie in der Zeichnung dargestellt, durch eine gemeinsame Antriebswelle 13 miteinander verbunden, so dass sie stets gemeinsam verdreht werden.

Die Horizontalposition des Transportwagens 4 und damit auch der von diesem mitgeführten Hubplattform 8 wird durch ein bekanntes Positionsmesssystem überwacht. In entsprechender Weise wird die Höhenposition der Hubplattform 8 gegenüber dem Tragwagen 4 mit einem Höhenmesssystem ermittelt. Die Ausgangssignale des Positionsmesssystemes und des Höhenmesssystemes werden einer Steuerung des Regalbediensystemes 3 zugeführt.

Die Funktionsweise des beschriebenen Regalbediengerätes 3 ist folgende:

Zunächst sei angenommen, dass bei unveränderter Horizontalposition des Tragwagens 4 und der Hubplattform 8 letztere aus der in Figur 1 dargestellten Position weiter abgesenkt werden soll. Um die Spannseile 11 bei dieser Vertikalbewegung straff zu halten und auf diese Weise eine seitliche Auslenkung der Hubplattform 8 zu verhindern, ist es erforderlich, die Länge der Spannseile 11 zwischen der Hubplattform 8 und den entsprechenden Seiltrommeln 12 zu verkürzen. Die erforderliche effektive Länge der Spannseile 11 lässt sich aus dem Abstand der Hubplattform 8 von den Seiltrommeln 12 sowie aus der Höhenposition der Hubplattform 8 nach trigonometrischen Funktionen berechnen. Diese Rechenarbeit wird von der Steuerung durchgeführt, welche den Seiltrommeln 12 entsprechenden Befehle zum Aufwickeln der Spannseile 11 erteilt.

Soll die Hubplattform 8 aus der in Figur 1 dargestellten Position ausschließlich horizontal nach rechts bewegt werden, erhält der Antrieb des Tragwagens 4 die entsprechenden Befehle. Um nun ein seitliches Auslenken der Hubplattform 8 zu verhindern, müssen die in Figur 1 rechts der Hubplattform 8, also in Fahrtrichtung liegenden Spannseile 11 entsprechend verkürzt und die in Figur 1 links von der Hubplattform 8, also gegen die Fahrtrichtung laufenden Spannseile 11 entsprechend verlängert werden. Erneut gibt die Steuerung den verschiedenen Seiltrommeln 12 die entsprechenden Befehle, die sie nach trigonometrischen Funktionen wiederum aus der Höhenposition der Hubplattform 8 und aus der sich verändernden Horizontalposition des Tragwagens 4 errechnet.

Eine allgemeine Bewegung der Hubplattform 8, bei der diese sowohl ihre Horizontal- als auch ihre Höhenposition verändert, ergibt sich aus einer Überlagerung der oben beschriebenen reinen Vertikal- und reinen Horizontalbewegung.

## Patentansprüche

1. Regalbediengerät (3) mit
a) einem Tragwagen (4), der mittels eines Antriebs an mindestens einer im wesentlichen horizontalen Tragschiene (6) entlang eines Regalganges verfahrbar ist;
b) einer von dem Tragwagen (4) mitgeführten Hubplattform (8) zur Aufnahme des Lagerguts (10):
c) einer Hubvorrichtung, mit welcher die Hubplattform (8) gegenüber dem Tragwagen (4) in vertikaler Richtung bewegbar ist;
d) einer Stabilisierungseinrichtung, welche ein seitliches Ausschwenken der Hubplattform (8) verhindert;
e) wobei die Hubvorrichtung mindestens zwei Zugmittel (7) umfasst, an denen die Hubplattform (8) von dem Tragwagen (4) abgehängt ist;
**dadurch gekennzeichnet, dass**
f) die Stabilisierungseinrichtung umfasst:
fa) mindestens drei Zugmittel (11), die an in Fahrtrichtung gegenüberliegenden Seiten der Hubplattform (8) befestigt sind, wobei mindestens zwei Zugmittel (11) zu mindestens zwei Befestigungsstellen verlaufen, die im Bereich des einen Gangendes angeordnet sind, und mindestens ein Zugmittel (11) zu einer Befestigungsstelle verläuft, die im Bereich des anderen Gangendes angeordnet ist;
fb) für jedes Zugmittel (11) ein Antrieb (12), durch dessen Betätigung die effektive Länge des Zugmittels (11) zwischen der Hubplattform (8) und der Befestigungsstelle veränderbar ist;
fc) eine Steuerung, welche die Antriebe (12) so ansteuert, dass die Zugmittel (11) in der jeweils gewünschten Position der Hubplattform (8) straff sind.

2. Regalbediengerät nach Anspruch 1, **dadurch gekennzeichnet, dass** die Antriebe (12) paarweise an den gegenüberliegenden Enden des Regalganges angeordnet sind und so die dortigen Befestigungsstellen bilden.

3. Regalbediengerät nach Anspruch 1, **dadurch gekennzeichnet, dass** die Antriebe an der Hubplattform angeordnet sind.

4. Regalbedierigerät nach einem der vorhergehenden Ansprüche, **dadurch gekennzeichnet, daß** die Antriebe (12) Trommeln sind, auf welche flexible Zugmittel (11) aufwikkelbar sind.

5. Regalbediengerät nach Anspruch 4, **dadurch gekennzeichnet, dass** die jeweils auf einer Seite der Hubplattform (8) angeordneten Trommeln (12) durch eine gemeinsame Antriebswelle (13) angetrieben sind.

## Revendications

1. Transstockeur (3), avec
a) un chariot porteur (4), qui au moyen d'un entraînement peut être déplacé le long d'un couloir entre rayonnages sur au moins un rail porteur (6) sensiblement horizontal ;
b) une plate-forme de levage (8), emportée par le chariot porteur (4) et destinée à recevoir les marchandises entreposées (10) ;
c) un dispositif de levage, par lequel la plate-forme de levage (8) peut être déplacée en direction verticale par rapport au chariot porteur (4) ;
d) un équipement stabilisateur, qui empêche un balancement latéral de la plate-forme de levage (8) ;
e) sachant que le dispositif de levage comprend au moins deux moyens de traction (7), par lesquels la plate-forme de levage (8) est suspendue au chariot porteur (4) ;
**caractérisé en ce que**
f) l'équipement stabilisateur comprend :
fa) au moins trois moyens de traction (11), qui sont fixés sur des côtés opposés, dans la direction de marche, de la plate-forme de levage (8), sachant qu'au moins deux moyens de traction (11) s'étendent vers au moins deux points de fixation qui sont disposés dans la région d'une des extrémités du couloir, et qu'au moins un moyen de traction (11) s'étend vers un point de fixation qui est disposé dans la région de l'autre extrémité du couloir ;
fb) un entraînement (12) pour chaque moyen de traction (11), par l'actionnement duquel la longueur effective du moyen de traction (11) entre la plate-forme de levage (8) et le point de fixation peut être modifiée ;
fc) une commande, qui asservit les entraînements (12) de telle sorte que les moyens de traction (11) sont tendus dans la position respectivement souhaitée de la plate-forme de levage (8).

2. Transstockeur selon la revendication 1, **caractérisé en ce que** les entraînements (12) sont disposés par paires aux extrémités opposées du couloir entre rayonnages, et y forment les points de fixation correspondants.

3. Transstockeur selon la revendication 1, **caractérisé en ce que** les entraînements sont disposés sur la plate-forme de levage.

4. Transstockeur selon l'une des revendications précédentes, **caractérisé en ce que** les entraînements (12) sont des tambours sur lesquels peuvent être enroulés des moyens de traction souples (11).

5. Transstockeur selon la revendication 4, **caractérisé en ce que** les tambours (12) respectivement disposés sur un côté de la plate-forme de levage (8) sont entraînés par un arbre d'entraînement commun (13).

## Claims

1. Storage and retrieval unit (3) comprising:
a) a supporting carriage (4) which is movable along a rack aisle on at least one substantially horizontal supporting rail (6) by means of a drive;
b) a lifting platform (8) carried along by the supporting carriage (4) and intended for receiving the storage item(s);
c) a lifting apparatus by means of which the lifting platform (8) is movable in the vertical direction relative to the supporting carriage (4);
d) a stabilizing device which prevents lateral deflection of the lifting platform (8);
e) wherein
the lifting apparatus comprises at least two traction means (7) by which the lifting platform (8) is suspended from the supporting carriage (4) ;
**characterized in that**
f) the stabilizing device comprises
fa) at least three traction means (11) fastened to sides of the lifting platform (8) which are opposite in the direction of travel, at least two of the traction means (11) running to at least two fastening points arranged in a region of one end of the rack aisle, and at least one of the traction means (11) running to a fastening point arranged in a region of the other end of the rack aisle;
fb) for each of the traction means (11) a drive (12), through the actuation of which the effective length of the traction means (11) between the lifting platform (8) and the respective fastening point can be changed;
fc) a control system which controls the drives (12) in such a way that the traction means (11) are taut in each desired position of the lifting platform (8).

2. Storage and retrieval unit according to Claim 1,
wherein the drives (12) are arranged in pairs at the opposite ends of the rack aisle and thus form the fastening points at these locations.

3. Storage and retrieval unit according to Claim 1,
wherein the drives (12) are arranged on the lifting platform.

4. Storage and retrieval unit according to Claim 1,
wherein the drives (12) comprise drums onto which flexible traction means (11) can be wound up.

5. Storage and retrieval unit according to Claim 4,
wherein those of the drums (12) which are arranged on a same side of the lifting platform (8) are driven by a common drive shaft (13).
